Europäisches Patentamt

European Patent Office

Office européen des brevets

(19)

(11) Publication number: **0 071 489**
**B1**

# (12) EUROPEAN PATENT SPECIFICATION

(45) Date of publication of patent specification: **20.11.86**

(21) Application number: **82304048.0**

(22) Date of filing: **30.07.82**

(51) Int. Cl.⁴: **G 11 B 5/127,** G 11 B 5/17 //
G11B5/33

(54) A perpendicular magnetic recording and reproducing head.

(30) Priority: **30.07.81 JP 118525/81**

(43) Date of publication of application:
**09.02.83 Bulletin 83/06**

(45) Publication of the grant of the patent:
**20.11.86 Bulletin 86/47**

(84) Designated Contracting States:
**DE FR GB**

(56) References cited:
EP-A-0 012 912
EP-A-0 031 216
DE-A-1 952 402
DE-A-2 104 445
DE-A-2 658 956
DE-A-2 819 208

PATENTS ABSTRACTS OF JAPAN, vol. 4, no.
39, (P-4)(521) 28th March 1980, page 121 P 4
IBM TECHNICAL DISCLOSURE BULLETIN, vol.
18, no. 1, June 1975, pages 19-22, Armonk,
N.Y., USA L.T. ROMANKIW et al.: "Thin film
and thin-film/ferrite hybrid magnetic heads"

(73) Proprietor: **FUJITSU LIMITED**
**1015, Kamikodanaka Nakahara-ku**
**Kawasaki-shi Kanagawa 211 (JP)**

(72) Inventor: **Toda, Junzo**
**Takakuwa Haitsu 203 1033, Shimoaso**
**Tama-ku Kawasaki-shi Kanagawa 215 (JP)**
Inventor: **Hiyane, Masao**
**546, Futoo-cho Kohoku-ku**
**Yokohama-shi Kanagawa 222 (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

(56) References cited:
**IBM TECHNICAL DISCLOSURE BULLETIN, vol.**
**23, no. 11, April 1981, page 5097-5098, Armonk,**
**N.Y., USA P.A. ALBERT et al.: "Method of**
**forming a probe-type head for vertical**
**recording"**

Courier Press, Leamington Spa, England.

(56) References cited:
IBM TECHNICAL DISCLOSURE BULLETIN, vol. 15, no. 2, July 1972, pages 516-517, Armonk, N.Y., USA R.B. WATROUS: "Horizontal thin-film head with symmetrical windings"
PATENTS ABSTRACTS OF JAPAN, vol. 4, no. 131, (P-27)(613), 13th September 1980, page 163 P 27

PATENTS ABSTRACTS OF JAPAN, vol. 4, no. 66, (P-11)(548), 17th May 1980, page 78 P 11
PATENTS ABSTRACTS OF JAPAN, vol. 5, no. 69, (P-60)(741), 9th May 1981

IBM TECHNICAL DISCLOSURE BULLETIN, vol. 24, no. 4, September 1981, pages 1931-1932, Armonk, N.Y., USA T.A. SCHWARZ: "Perpendicular recording read/write head with high reluctance leg"

IBM TECHNICAL DISCLOSURE BULLETIN, vol. 24, no. 8, January 1982, pages 4034-4035, Armonk, N.Y., USA T.A. SCHWARZ: "Vertical record/read magnetic head"

## Description

The present invention relates to a perpendicular magnetic recording and reproducing head.

A perpendicular magnetic head is known in which an auxiliary pole magnetizes a main pole so as to effect high-density recording and reproducing of information on a medium of, for example, a magnetic disk (see JP—B—52-134706). In this conventional perpendicular magnetic head, a main pole, formed from a thin magnetic film made of, for example, permalloy, is placed adjacent to the front surface of a recording medium, and an auxiliary pole, made of ferrite and having a coil wound around it, is placed so that it faces the back surface of the recording medium. By supplying a current to the coil, the auxiliary pole is magnetized and, accordingly, the thin film of the main pole is magnetized by the magnetized auxiliary pole, resulting in high-density recording since the medium is magnetized in the direction perpendicular to the surface thereof. On reproducing, variations of the recorded magnetizations in the medium are read by the thin film of the main pole, resulting in variations of the voltage which is generated between both ends of the coil wound around the auxiliary pole.

The above-mentioned conventional magnetic head, however, has the following disadvantages. Firstly, the inductance of the coil wound around the auxiliary pole is so high that high-frequency operation is difficult. Secondly, the distance between the main pole and the auxiliary pole is so great that recording and reproducing efficiency is low. Thirdly, rigid disks are unsatisfactory as recording medium since they generally are so thick that the distance between the main pole and the auxiliary pole is too great to effect recording or reproducing.

In order to overcome these disadvantages, the use of a main pole member without the use of an auxiliary pole may be considered, with a thin film coil being wound around the main pole member. However, it is difficult to wind a thin film coil around a main pole member formed from a thin film, and the number of turns of such a thin-film coil would normally be limited to only a few turns. Therefore, the use of only a main pole having a thin-film coil wound directly around it has not been considered practicable. One attempt to overcome these problems is shown in EP—A—0031216 in which a thin-film main pole member is supported, at the edge of a substrate, with one end of the film adjacent to a magnetic core at the centre of a thin-film coil the plane of which is perpendicular to that of the said main pole member. It is desirable, however, to provide a more convenient form of recording head with improved magnetic coupling.

According to the present invention there is provided a perpendicular magnetic recording and reproducing head, comprising: an electrical coil having a plurality of turns made each of substantially planar thin-film electrically conductive material the plane of which is substantially perpendicular to the coil axis, around which the turns extend; and a main pole member which is made of thin-film magnetic material and has an operative end exposed for presentation to a magnetic recording medium when the head is in use and is arranged so that electromagnetic coupling between the coil and the main pole member when the head is in use enables perpendicular mode recording to be effected in such a medium in accordance with signal currents passed through the coil;

characterised in that the said main pole member extends, adjacent to one side of the coil and in a plane substantially parallel to the turns of the coil, substantially radially from an axial location, around which the said turns extend, to a first location which is adjacent to a peripheral portion of the coil and at which the said operative end is exposed, there being insulating material interposed between the said main pole member and the said turns, and further characterised by an additional magnetic member, made of thin-film magnetic material, which extends, adjacent to the opposite side of the coil, substantially radially from the said axial location to a second location adjacent to a peripheral portion of the coil, which second location is substantially diametrically opposed to the said first location with respect to the said axial location, there being insulating material interposed between the said additional magnetic member and the said turns, and the said additional magnetic member being magnetically in contact with the said main pole member at the said axial location.

In one embodiment of the invention, the said additional magnetic member comprises a thin magnetic film extending over the entire diameter of the (spiral) coil, the main pole member and the said thin magnetic film forming a substantially closed flux structure.

According to another embodiment of the invention, the end of the main pole member for recording and reproducing information has a width smaller than the width of other portions of the main pole.

According to still another embodiment of the invention, the additional magnetic member has a thickness larger than the thickness of the main pole member.

According to yet another embodiment of the invention, the (spiral) coil comprises a number of stacked thin-film turns insulated from one another by insulating film.

According to a further embodiment of the invention, the recording and reproducing head includes a magnetoresistive element for reproducing information.

Reference will now be made, by way of example, to the accompanying drawings, in which:—

Figure 1 is a side view of a conventional perpendicular magnetic head having an auxiliary pole;

Figure 2 is a side view of an imaginary proposed perpendicular magnetic head having a main pole only;

Figure 3 is a plan view of a first perpendicular magnetic recording and reproducing head embodying the present invention;

Figure 4 is a cross-sectional view taken along line IV—IV' of Fig. 3;

Figure 5 is a plan view of a second perpendicular magnetic recording and reproducing head embodying the present invention;

Figure 6 is a cross-sectional view taken along line VI—VI' of Fig. 5;

Figure. 7 is a cross-sectional view of a third perpendicular magnetic recording and reproducing head embodying the present invention;

Figure 8 is a plan view of a fourth perpendicular magnetic recording and reproducing head embodying the present invention;

Figure 9 is a cross-sectional view taken along line IX—IX' of Fig. 8;

Figure 10 is a cross-sectional view of a fifth perpendicular magnetic recording and reproducing head embodying the present invention;

Figure 11 is a cross-sectional view of a sixth perpendicular magnetic recording and reproducing head embodying the present invention; and

Figure 12 is a graph illustrating the recording and reproducing characteristics of the magnetic head of Figs. 3 and 4.

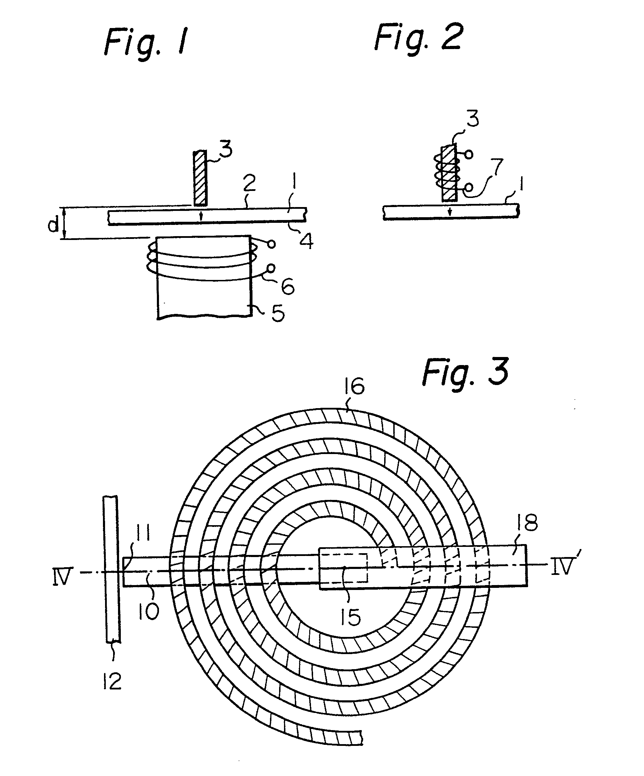

Before describing the embodiments of the present invention, a conventional example will first be described with reference to Fig. 1. In Fig. 1 recording medium 1 has recording surface 2 and back surface 4. Main pole 3, made of a thin magnetic film of, for example, permalloy, has an end portion which is placed so as to face recording surface 2 of medium 1. Near the back surface of medium 1, an end of auxiliary pole 5 is placed so as to face back surface 4 of medium 1. Auxiliary pole 5 has a large volume in comparison with main pole 3 and has coil 6 wound around it. By supplying a current to coil 6, auxiliary pole 5 is magnetized and then main pole 3 is magnetized by magnetized auxiliary pole 5. Since main pole 3 is a thin film, it is strongly magnetized, and, therefore, recording surface 2 of medium 1 is magnetized in the direction perpendicular to the surface of medium 1, allowing high-density recording. On reproducing, when medium 1 circulates, variations of the recorded magnetizations in medium 1 are transferred to main pole 3. The variations of the magnetizations in main pole 3 then cause variations of the voltage between both ends of coil 6 wound around auxiliary pole 5. Thus, the information recorded in medium 1 can be read out.

The above-mentioned conventional magnetic head of Fig. 1, however, has the following disadvantages. Firstly, since coil 6 is wound around auxiliary pole 5 having a large volume, the inductance of coil 6 becomes so high that the response during a high-frequency recording or reproducing operation is delayed too much. Secondly, since main pole 3 and auxiliary pole 5 are separated by distance d, which is generally greater than the thickness of medium 1, the distance between the main pole 3 and auxiliary pole 5 is so great that the recording and reproducing efficiency is low.

Especially, rigid disks made of, for example, aluminum connot be used as recording medium 1 of Fig. 1 since they have a thickness of about several millimeters and, therefore, render the distance between main pole 3 and auxiliary pole 5 too great to effect a recording or reproducing operation. Further, even if a thin rigid disk is used as medium 1, if the thin rigid disk is made of a metal, for example, aluminum, eddy currents are produced on the surface of the rigid disk by large-volume auxiliary pole 5, thereby causing a decrease in the recorded magnetization of the rigid disk. Therefore, metal disks are generally unsuitable as recording medium 1 of Fig. 1. Only floppy disks having a thickness of about 50 μm through 100 μm can be used, but even when they are used, the recording or reproducing efficiency may be low.

In order to overcome these disadvantages in the magnetic head of Fig. 1, a thin film head having a main pole, but not having an auxiliary pole, such as that illustrated in Fig. 2 may be considered. In Fig. 2, auxiliary pole 5 of Fig. 1 is not used. Instead, main pole 3 has coil 7 wound around it. If coil 7 is a winding wire, the inductance of coil 7 will also become high, resulting in a low-response speed during high-frequency operation. Therefore, coil 7 must be wound by thin films by stacking the thin films around main pole 3. However, the manufacturing steps for stacking the thin films around main pole 3 are very complicated, and, thus, it is difficult in practice to manufacture the magnetic head of Fig. 2.

Now embodiments of the present invention will be described with reference to Fig. 3 through 12.

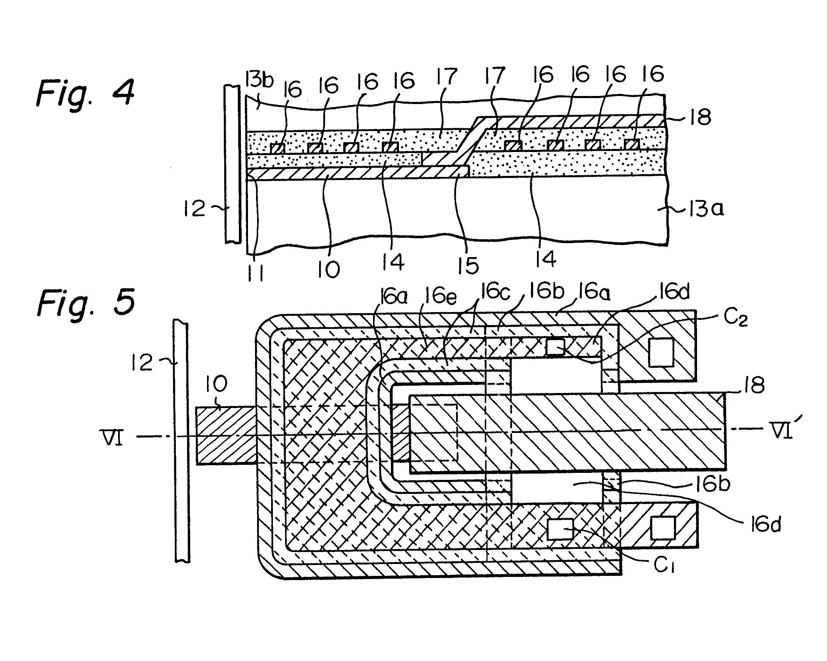

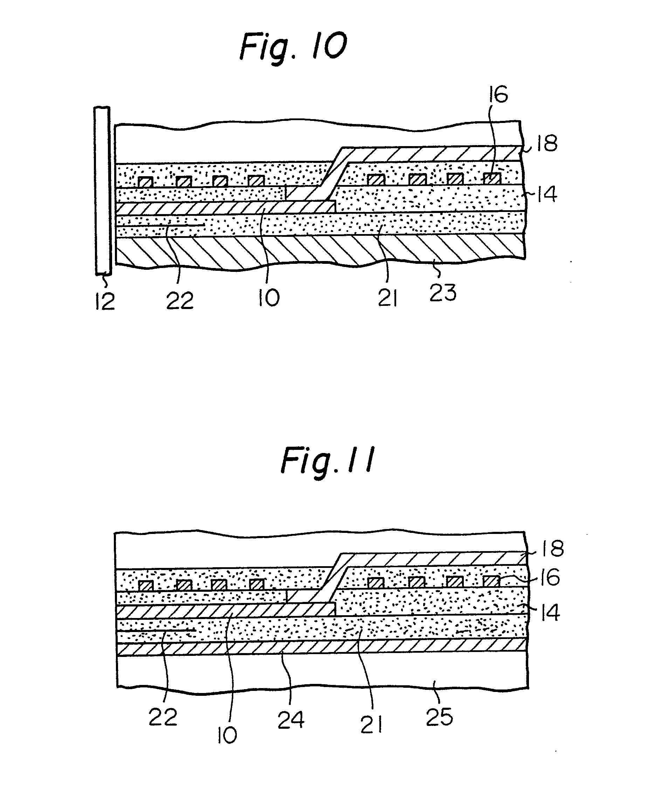

Figures 3 and 4 illustrate the first embodiment of the present invention. In Fig. 3, 10 is a main pole member formed from a first thin magnetic film made of, for example, permalloy; 11 is the operative end of the main pole member 10, being exposed for recording and reproducing information; 12 is a recording medium of, for example, a floppy disk or a rigid disk made of aluminum on which a thin magnetic film is deposited; 16 is a spiral coil made of thin metal film of, for example, copper or aluminum formed by an evaporating, sputtering, or plating technique; 15 denotes an axial location, at the center of spiral coil 16; and 18 is an additional magnetic member constituted by a second thin magnetic film which is magnetically in contact with the main pole member 10 at the axial location 15. End 11 of main pole 10 is placed near the surface of recording medium 12. End 11 may alternatively be placed so as to contact the surface of recording medium 12.

Figure 4 illustrates how the main pole 10 is formed on a substrate 13a made of inorganic material, for example ceramic material or glass. Main pole 10 and the surface of substrate 13a are covered with a first insulating layer 14. Spiral coil 16 is placed on first insulating layer 14. Spiral coil 16 has a number of turns but, in this embodiment, is formed by one metal layer. That is, spiral coil 16 does not have a stacked structure, i.e., a multilayer structure. Thus the main pole member 10

extends, adjacent to one side of the coil 16 and substantially parallel to its turns, substantially radially from the axial location 15 to terminate, at its operative end 11, adjacent to a peripheral portion of the coil.

Spiral coil 16 is covered with a second insulating film 17, which is formed on first insulating film 14. At the axial location 15 near the centre of the spiral coil 16, a contact window is formed through first insulating layer 14 and second insulating film 17. In the contact window, main pole 10 is in contact with second thin magnetic film 18. Second thin magnetic film 18 extends radially in the direction opposite to that of the main pole 10. Second insulating film 17 and second thin magnetic film 18 are covered with protective film 13b made of inorganic material, for example ceramic material or glass. Assuming that, with respect to the center of spiral coil 16, the portion of spiral coil 16 nearest to recording medium 12 is the front portion of spiral coil 16 and that the portion of spiral coil 16 farthest from recording medium 12 is the rear portion of spiral coil 16, main pole 10 is magnetized by the front portion of spiral coil 16, and second thin magnetic film 18 is magnetized by the rear portion of spiral coil 16 when a current is supplied to spiral coil 16. This is apparent from Figs. 3 and 4.

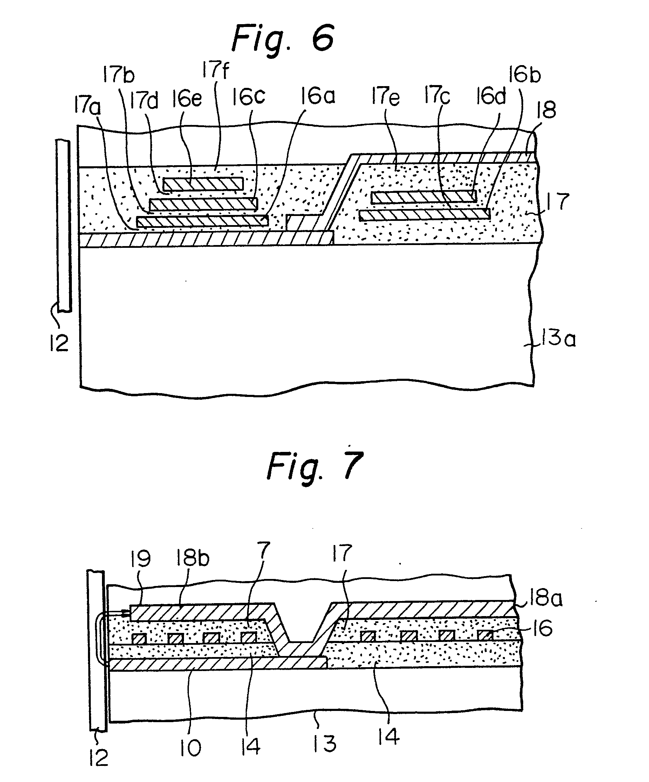

A second embodiment of the invention is described with reference to Figs. 5 and 6. In this embodiment, briefly, the spiral coil has a stacked structure, i.e., a multilayer structure. That is, the spiral coil has a number of turns which are stacked by employing a plurality of metal films. Between the metal films, an insulating film is provided. More precisely, in Figs. 5 and 6, 16a is a first U-shaped metal film placed in the lowest portion of the spiral coil and is formed on first insulating film 17a, first U-shaped metal film 16a being covered with second insulating film 17b; 16b is a first rectangular metal film, one end of which is in contact with one end of U-shaped metal film 16a at contact point $c_1$, first rectangular metal film 16b being covered with third insulating film 17c; 16c is a second U-shaped metal film, one end of which is in contact with the other end of first rectangular metal film 16b at contact point $c_2$, second U-shaped metal film 16c being formed on second insulating film 17b and being covered with fourth insulating film 17d; 16d is a second rectangular metal film, one end of which is in contact with one end of second U-shaped metal film 16c at contact pint $c_1$, second rectangular metal film 16d being formed on third insulating film 17c and being covered with fifth insulating film 17e; and 16e is a third U-shaped metal film, one end of which is in contact with the other end of second rectangular metal film 16d at contact point $c_2$, third U-shaped metal film 16e being formed on fourth insulating film 17d and being covered with sixth insulating film 17f.

In such a manner as described above with reference to Figs. 5 and 6, a spiral coil having a stacked structure can be obtained.

The spiral coil may alternatively be formed as a helix.

By forming such a spiral coil so that it has a single layer structure, a multilayer structure, or a helical structure, the step of winding the coil around the main pole is not necessary. Therefore, such a spiral coil is suitable in the manufacture of a thin-film head, enabling a coil having a large number of turns to be manufactured.

A third embodiment of the invention is described with reference to Fig. 7. The difference between Fig. 4 and Fig. 7 is that in Fig. 7, the second thin magnetic film is extended to cover not only the rear portion but also the front portion of spiral coil 16. In Fig. 7, the rear portion and the front portion of the second thin magnetic film are denoted by 18a and 18b, respectively. Front end 19 of front portion 18b of the second thin magnetic film is not exposed on the front surface of the head, which faces the recording medium, so that front end 19 does not unnecessarily record or reproduce. Due to the structure of Fig. 7, since the distance between the front end of main pole 10 and front end 19 of front portion 18b of the second thin magnetic film is very short, the magnetic resistance is decreased and, accordingly, almost all of the magnetic flux from the front end of main pole 10 goes to front end 19 of front portion 18b of the second thin magnetic film.

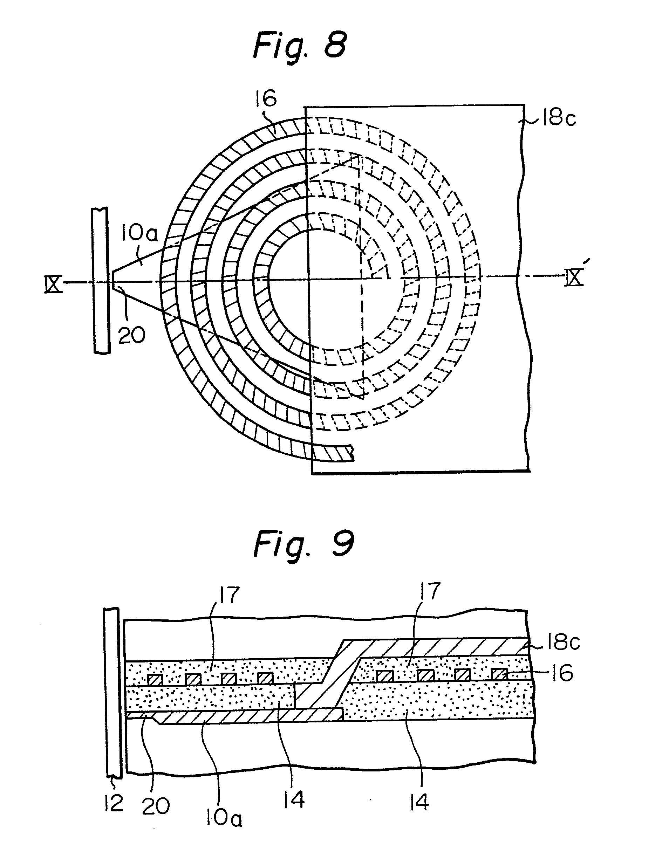

A fourth embodiment of the present invention is described with reference to Figs. 8 and 9. The difference between Figs. 3 and 4 and Figs. 8 and 9 is that in Figs. 8 and 9 both the width and the thickness of main pole 10a at its front portion 20 are smaller than those at its rear portion; and both the width and thickness of second thin magnetic film 18c are greater than those of main pole 10a. Due to this structure, a stronger magnetic field can be generated at the narrower and thinner front portion 20 of main pole 10a during recording, which can give improved recording characteristics. Also, since main pole 10a and second thin magnetic film 18c are wider and thicker at the rear portion, leakage of the magnetic flux is decreased during reproducing, which can give improved reproduction efficiency.

A fifth embodiment is described with reference to Fig. 10. The difference between Fig. 4 and Fig. 10 is that, in Fig. 10, third insulating film 21 is provided under main pole 10 and under first insulating film 14, and a magneto-resistive (MR) element 22 is provided in third insulating film 21. The front end of MR element 22 is exposed so as to face recording medium 12. As is well known, a MR element, which is made of, for example, permalloy has a very thin thickness of about 500 angstroms and, is used only for reproducing information. Under third insulating film 21, magnetic material of ferrite substrate 23 is formed. Main pole 10 and ferrite substrate 23 act as shield layers for ME element 22. In the structure of Fig. 10, main pole is used only for recording and MR element 22 is used only for reproducing. Since MR element 22 is thinner, the reproduction of information recorded at a high density is facilitated.

A sixth embodiment is described with reference to Fig. 11. The difference between Fig. 10 and Fig. 11 is that in Fig. 11, in place of ferrite substrate 23, third thin magnetic film 24 is formed under third insulating film 21, and under third thin magnetic film 24, nonmagnetic inorganic substrate 25 is provided. Third thin magnetic film 24 also acts as a shield layer for MR head 22. Due to this structure, the same effects as in the fifth embodiment of Fig. 10 are obtained.

The structures of Figs. 10 and 11 can also be manufactured using the manufacturing steps of a conventional technique for forming an inductive thin film head.

The provision of the second thin magnetic film 18, which is magnetically coupled to the rear portion of spiral coil 16, serves to increase the magnetic flux in main pole 10, resulting in improved recording and reproducing efficiency.

Further, a spiral coil or a helical coil may be provided at both sides of the main pole 10, instead of just to one side thereof, so as to increase the recording/reproducing efficiency.

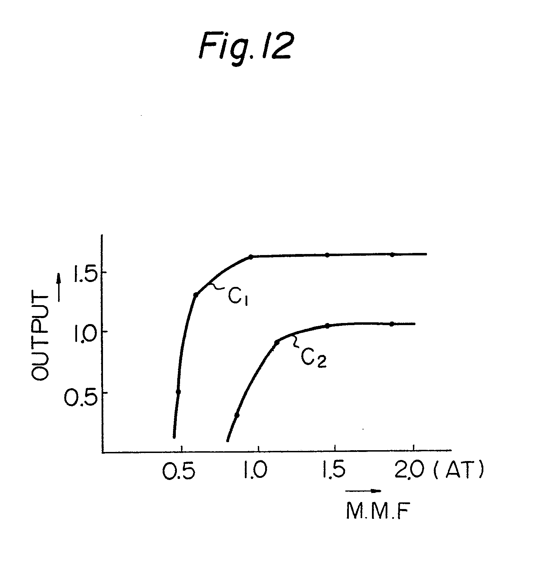

Figure 12 shows two experimental curves $c_1$ and $c_2$. Curve $c_1$ represents the recording and reproducing characteristics when second thin magnetic film 18 is provided as in the first embodiment illustrated in Figs. 3 and 4, and curve $c_2$ shows the recording and reproducing characteristics when second thin magnetic film 18 is not provided in the structure of Figs. 3 and 4. In both cases, a floppy disk having a 0.5 μm thick cobalt-chromium alloy film and an underlayered 0.5 μm thick nickel-iron alloy film is rotated at a velocity of 2 m/s. The horizontal axis represents the magneto-motive force which is supplied to spiral coil 16, and the vertical axis represents the reproduced output which is normalized by the saturation output when second thin magnetic film 18 is not provided. As will be apparent from Fig. 12, the magneto-motive force to get a saturation output decreases by about 60% by providing second thin magnetic film 18. The reproduced output increases by about 60%, too.

The recording and reproducing characteristics are expressed as follows according to the experimental results.

FLOPPY DISK (Co. · Cr 0.5 μm, Ni ·Fe 0.5 μm) V = 2 m/s

*1. Recording Characteristics*

  a. An auxiliary pole was used as in the conventional example of Fig. 1 (first example)

$$I_{90} = 5.0 \text{ AT}$$

  b. Only a main pole, and not second thin magnetic film 18, was used (second example)

$$I_{90} = 1.2 \text{ AT}$$

  c. Only a main pole and second thin magnetic film 18 were used as in the first embodiment of Fig. 3 (third example)

$$I_{90} = 0.7 \text{ AT}$$

*2. Reproducing Characteristics*

  a. The first example

$$V_0 = 0.06 \text{ μV}_{p-p}/\text{μm} \cdot \text{turn}$$

  b. The second example

$$V_0 = 0.08 \text{ μV}_{p-p}/\text{μm} \cdot \text{turn}$$

  c. The third example

$$V_0 = 0.13 \text{ μV}_{p-p}/\text{μm} \cdot \text{turn}$$

RIGID DISK (Co. · Cr 0.5 μm, Ni · Fe 0.5 μm) V = 6 m/s

*1. Recording Characteristics*

  a. Only a main pole and second thin magnetic film 18 were used, the front end of the main pole being narrower and thinner as in the fourth embodiment of Fig. 9 (fourth example)

$$I_{90} = 0.42 \text{ A/T}$$

  b. Only a main pole and second thin magnetic film 18 were used under the same condition as above plus a condition where second thin magnetic film 18 was extended to the front portion of the main pole as in a combination of the third embodiment of Fig. 7 and the fourth embodiment of Fig. 9 (fifth example)

$$I_{90} = 0.39 \text{ AT}$$

*2. Reproducing Characteristics*

The fourth example

$$V_0 = 0.8 \text{ μV}_{p-p}/\text{μm} \cdot \text{turn}$$

The fifth example

$$V_0 = 1.0 \text{ μV}_{p-p}/\text{μm} \cdot \text{turn}$$

In the above experimental results, $I_{90}$ is the current supplied to the spiral when a 90% value of a saturation output is obtained; AT is ampere turns; $V_0$ is the peak-to-peak output voltage obtained in the spiral coil; and μV$_{p-p}$/μm · turn is the unit of the output voltage represented by micron volts per 1 μm of the track width of the recording medium and per one turn of the spiral coil.

As will be apparent from the above experimental results, the recording/reproducing characteristics can be improved, in embodiments of the present invention, as compared with prior art devices.

From the foregoing description, it will be apparent that, according to an embodiment of the present invention, by forming a thin-film spiral coil having a number of turns near a main pole member, a thin film perpendicular magnetic recording and reproducing head can be obtained, not having an auxiliary pole, which can be reasonably easily manufactured, which is suitable for high-frequency operation, which has a desirably high recording/reproducing efficiency, and with which a rigid disk can be used as a recording medium.

## Claims

1. A perpendicular magnetic recording and reproducing head, comprising: an electrical coil (16) having a plurality of turns made each of substantially planar thin-film electrically conductive material the plane of which is substantially perpendicular to the coil axis, around which the turns extend; and a main pole member (10) which is made of thin-film magnetic material and has an operative end (11) exposed for presentation to a magnetic recording medium (12) when the head is in use and is arranged so that electromagnetic coupling between the coil and the main pole member when the head is in use enables perpendicular mode recording to be effected in such a medium in accordance with signal currents passed through the coil; characterised in that the said main pole member (10) extends, adjacent to one side of the coil (16) and in a plane substantially parallel to the turns of the coil, substantially radially from an axial location, around which the said turns extend, to a first location which is adjacent to a peripheral portion of the coil and at which the said operative end (11) is exposed, there being insulating material (14) interposed between the said main pole member and the said turns, and further characterised by an additional magnetic member (18), made of thin-film magnetic material, which extends, adjacent to the opposite side of the coil, substantially radially from the said axial location to a second location adjacent to a peripheral portion of the coil, which second location is substantially diametrically opposed to the said first location with respect to the said axial location, there being insulating material (17) interposed between the said additional magnetic member (18) and the said turns, and the said additional magnetic member being magnetically in contact with the said main pole member (10) at the said axial location.

2. A perpendicular magnetic recording and reproducing head as set forth in claim 1, wherein the said additional magnetic member (18) also extends, adjacent to the said opposite side of the coils, substantially radially from the said axial location so as to terminate at a third location, which third location is substantially diametrically opposed to the said second location with respect to the said axial location but is such that the end of the said additional magnetic member at the said third location is not exposed to the said recording medium when the head is in use.

3. A perpendicular magnetic recording and reproducing head as set forth in claim 1 or 2, wherein the said additional magnetic member (18) has a width larger than the width of the said main pole member (10).

4. A perpendicular magnetic recording and reproducing head as set forth in claim 1, 2 or 3, wherein the said additional magnetic member (18) has a thickness larger than that of the said main pole member (10).

5. A perpendicular magnetic recording and reproducing head as set forth in any preceding claim, wherein the said main pole member (10) is smaller in width at its operative end (20) than at the said axial location.

6. A perpendicular magnetic recording and reproducing head as set forth in any preceding claim, wherein the said main pole member (10) is smaller in thickness at its operative end (20) than elsewhere.

7. A perpendicular magnetic recording and reproducing head as set forth in any preceding claim, wherein the said electrical coil (16) comprises one electrically conductive thin film spirally formed in a plane.

8. A perpendicular magnetic recording and reproducing head as set forth in any one of claims 1 to 6, wherein the said electrical coil (16) comprises a plurality of stacked thin-film turns, there being insulating material (17) interposed between adjacent turns of the stack.

9. A perpendicular magnetic recording and reproducing head as set forth in any preceding claim, further comprising a magneto-resistive element (22) for use in reproducing information.

10. A perpendicular magnetic recording and reproducing head as set forth in any preceding claim, wherein there are two thin-film electrical coils (16), extending respectively at opposite sides of the said main pole member (10).

## Patentansprüche

1. Magnetkopf für vertikale Aufzeichnung und Wiedergabe, mit: einer elektrischen Spule (16), die eine Vielzahl von Windungen hat, die jeweils im wesentlichen aus planarem, elektrisch leitendem Dünnfilmmaterial bestehen, deren Ebene im wesentlichen vertikal zu der Spulenachse ist, um welche die Windungen sich erstrecken; und einem Hauptpolteil (10), welcher aus magnetischem Dünnfilmmaterial hergestellt ist und ein Arbeitsende (11) hat, welches zur Darstellung zu dem magnetischen Aufzeichnungsmedium (12), wenn der Kopf in Betrieb ist, exponiert und so angeordnet ist, daß elektromagnetische Kopplung zwischen der Spule und dem Hauptpolteil, wenn der Kopf in Betrieb ist, ermöglicht, daß ein vertikaler Aufzeichnungsmodus in einem solchen Medium in Übereinstimmung mit Signalströmen, die durch die Spule fließen, bewirkt wird; dadurch gekennzeichnet, daß der genannte Hauptpolteil (10) sich an einer Seite der Spule (16) angrenzend und in einer Ebene im wesentlichen parallel zu derjenigen der Windungen der Spule, im wesentlichen radial von einem axialen Ort, um den die genannten Windungen sich erstrecken, zu einem ersten Ort erstreckt, der an einen peripheren Abschnitt der Spule angrenzt und bei welchem das genannte Arbeitsende (11) exponiert ist, und wo ein isolierendes Material zwischen dem genannten Hauptpolteil und den genannten Windungen angeordnet ist, und ferner gekennzeichnet durch einen zusätzlichen magnetischen Teil (18), der aus einem magnetischen Dünnfilmmaterial hergestellt ist und der sich, angrenzend an der entgegengesetzten Seite der Spule, im wesentlichen radial von dem genannten axialen Ort zu einem zweiten Ort erstreckt, der an einem peripheren Abschnitt der Spule angrenzt, welcher Ort im wesentlichen diametral gegenüber dem genannten ersten Ort in Bezug auf den genannten axialen Ort ist, und an dem isolierendes Material (17) zwischen dem genannten zusätzlichen magnetischen Teil (18) und den genannten Windungen angeordnet ist, und der genannte zusätzliche magnetische Teil in magnetischem Kontakt mit dem genannten Hauptpolteil (10) bei dem genannten axialen Ort ist.

2. Magnetkopf für vertikale Aufzeichnung und Wiedergabe nach Anspruch 1, bei welchem der genannte zusätzliche magnetische Teil (18) sich auch, an der genannten gegenüberliegenden Seite der Spule angrenzend, im wesentlichen radial von dem genannten axialen Ort aus so erstreckt, daß er bei einem dritten Ort endet, welcher dritte Ort im wesentlichen diametral gegenüber dem genannten zweiten Ort in Bezug auf den genannten axialen Ort ist, jedoch so, daß das Ende des genannten zusätzlichen magnetischen Teils an dem genannten dritten Ort nicht zu dem genannten Aufzeichnungsmedium exponiert ist, wenn der Kopf in Betrieb ist.

3. Magnetkopf für vertikale Aufzeichnung und Wiedergabe nach Anspruch 1 oder 2, bei welchem der genannte zusätzliche magnetische Teil (18) eine Breite hat, die größer als die Breite des genannten Hauptpolteils (10) ist.

4. Magnetkopf für vertikale Aufzeichnung und Wiedergabe nach Anspruch 1, 2 oder 3, bei welchem der genannte zusätzliche magnetische Teil (18) eine Dicke hat, die größer als diejenige des genannten Hauptpolteils (10) ist.

5. Magnetkopfs für vertikale Aufzeichnung und Wiedergabe nach einem der vorhergehenden Ansprüche, bei welchem der genannte Hauptpolteil (10) an seinem Arbeitsende (20) in seiner Breite kleiner als an dem genannten axialen Ort ist.

6. Magnetkopf für vertikale Aufzeichnung und Wiedergabe nach einem der vorhergehenden Ansprüche, bei welchem der genannte Hauptpolteil (10) in seiner Dicke an seinem Arbeitsende (20) kleiner als anderswo ist.

7. Magnetkopf für verikale Aufzeichnungs und Wiedergabe nach einem der vorhergehenden Ansprüche, bei welchem die genannte elektrische Spule (16) einen elektrisch leitenden Dünnfilm umfaßt, der spiralförmig in einer Ebene gebildet ist.

8. Magnetkopf für vertikale Aufzeichnung und Wiedergabe nach einem der Ansprüche 1 bis 6, bei welchem die genannte elektrische Spule (16) eine Vielzahl von gestapelten Dünnfilmwindungen umfaßt, wobei isolierendes Material zwischen benachbarten Windungen des Stapels angeordnet ist.

9. Magnetkopf für vertikale Aufzeichnung und Wiedergabe nach einem der vorhergehenden Ansprüche, ferner mit einem magneto-resistiven Element (22) zur Verwendung bei der Wiedergabe von Information.

10. Magnetkopf für vertikale Aufzeichnung und Wiedergabe nach einem der vorhergehenden Ansprüche, bei welchem zwei elektrische Dünnfilmspulen (16) vorhanden sind, die sich jeweils an gegenüberliegenden Seiten des genannten Hauptpolteils (10) erstrecken.

**Revendications**

1. Tête magnétique d'enregistrement et de reproduction perpendiculaire, comprenant une bobine électrique (16) comportant un ensemble de spires constituées chacune d'un matériau électriquement conducteur en couche mince essentiellement planar dont le plan est essentiellement perpendiculaire à l'axe de la bobine, autour duquel s'étendent les spires; et un élément polaire principal (10) qui est constitué d'un matériau magnétique en couche mince et comporte une extrémité active (11) exposée pour être présentée à un support d'enregistrement magnétique (12) quand la tête est en fonctionnement et qui est disposé pour qu'un couplage électromagnétique entre la bobine et l'élément polaire principal quand la tête est en fonctionnement permette d'effectuer un enregistrement en mode perpendiculaire sur ce support conformément aux courants de signal traversant la bobine; caractérisée en ce que l'élément polaire principal (10) s'étend, au voisinage d'un côté de la bobine (16) et dans un plan essentiellement parallèle aux spires de la bobine, essentiellement radialement d'un emplacement axial, autour duquel s'étendent les spires, à un premier emplacement qui est voisin d'une partie périphérique de la bobine et à laquelle est exposée l'extrémité active (11), un matériau isolant (14) étant interposé entre l'élément polaire principal et les spires, et caractérisée en outre par un élément magnétique supplémentaire (18), constitué d'un matériau magnétique en couche mince, qui s'étend, au voisinage du côté opposé de la bobine, essentiellement radialement de l'emplacement axial à un second emplacement voisin d'une partie périphérique de la bobine, ce second emplacement étant essentiellement diamétralement opposé au premier emplacement par rapport à l'emplacement axial, un matériau isolant (17) étant interposé entre l'élément magnétique supplémentaire (18) et les spires, et l'élément magnétique supplémentaire étant magnétiquement en contact avec l'élément polaire principal (10) à l'emplacement axial.

2. Tête magnétique d'enregistrement et de reproduction perpendiculaire selon la revendication 1, dans laquelle l'élément magnétique supplémentaire (18) s'étend également, au voisinage du côté opposé de la bobine, essentiellement radialement de l'emplacement axial pour se terminer à un trosième emplacement, ce troisième emplacement étant essentiellement diamétralement opposé au deuxième emplacement par rapport à l'emplacement axial mais étant tel que l'extrémité de l'élément magnétique supplémentaire au troisième emplacement n'est pas exposée au support d'enregistrement quand la tête est utilisée.

3. Tête magnétique d'enregistrement et de reproduction perpendiculaire selon l'une quelconque des revendications 1 et 2, dans laquelle l'élément magnétique supplémentaire (18) a une largeur supérieure à la largeur de l'élément polaire principal (10).

4. Tête magnétique d'enregistrement et de reproduction perpendiculaire selon l'une quelconque des revendications 1 à 3, dans laquelle l'élément magnétique supplémentaire (18) a une épaisseur supérieure à celle de l'élément polaire principal (10).

5. Tête magnétique d'enregistrement et de reproduction perpendiculaire selon l'une quelconque des revendications 1 à 4, dans laquelle l'élément polaire principal (10) est plus étroit à son extrémité active (20) qu'à l'emplacement axial.

6. Tête magnétique d'enregistrement et de reproduction perpendiculaire selon l'une quelconque des revendications 1 à 5, dans laquelle l'élément polaire principal (10) est plus mince à son extrémité active (20) qu'ailleurs.

7. Tête magnétique d'enregistrement et de reproduction perpendiculaire selon l'une quelconque des revendications 1 à 6, dans laquelle la bobine électrique (16) est constituée par une couche mince électriquement conductrice formée en spirale dans un plan.

8. Tête magnétique d'enregistrement et de reproduction perpendiculaire selon l'une quelconque des revendications 1 à 6, dans laquelle la bobine électrique (16) est constituée par un ensemble de spires en couche mince empilées, un matériau isolant (17) étant interposé entre les spires voisines de la pile.

9. Tête magnétique d'enregistrement et de reproduction perpendiculaire selon l'une quelconque des revendications 1 à 8, comprenant en outre un élément magnéto-résistant (22) servant à la reproduction d'informations.

10. Tête magnétique d'enregistrement et de reproduction perpendiculaire selon l'une quelconque des revendications 1 à 9, dans laquelle sont présentes deux bobines électriques en couche mince (16), s'étendant respectivement aux côtés opposés de l'élément polaire principal (10).

## Fig. 1

## Fig. 2

## Fig. 3

# Fig. 4

# Fig. 5

0 071 489

## Fig. 6

## Fig. 7

## Fig. 8

## Fig. 9

4

## Fig. 10

## Fig. 11

*Fig. 12*